# EUROPEAN PATENT SPECIFICATION

(11) **EP 2 163 691 B1**
(45) Date of publication and mention of the grant of the patent: **09.03.2016**
(21) Application number: 09162627.5
(22) Date of filing: 21.10.2005
(51) Int. Cl.: E02B 17/00, E02B 17/02, F03D 1/00, F03D 13/20, F03D 80/00

(54) **Device and method for offshore mounting for electricity-generating wind-turbine**
Vorrichtung und Methode zum Installieren von Offshore-Anlagen
Dispositif et procédé pour installer construction offshore

(30) Priority: 21.10.2005 EP 05447237
(43) Date of publication of application: 17.03.2010
(62) Divisional of application: 05447237.8
(73) Proprietor: Dredging International N.V., 2070 Zwijndrecht (BE)
(72) Inventor: Van den Bergh, Peter, 2540 Hove (BE); Ockier, Martin, 9090 Melle (BE)
(74) Representative: Brouwer, Hendrik Rogier

(56) References cited:
- WO-A1-02/095139
- FR-A5- 2 215 823
- JP-A- 2000 213 451
- JP-A- 2001 254 669
- PERNPEINTNER R: "OFFSHORE SITING OF LARGE WIND ENERGY CONVERTER SYSTEMS IN THE GERMAN NORTH SEA AND BALTIC REGIONS", MODERN POWER SYSTEMS, WILMINGTON PUBLISHING, WILMINGTON, GB, vol. 4, no. 6, 1 June 1984 (1984-06-01), pages 33-40, XP001014353, ISSN: 0260-7840

## Description

### BACKGROUND TO THE INVENTION

Economical construction and installation of an offshore mounting for an upright construction such as a mast for transmission and/or receipt of electromagnetic radiation or a mast for weather and/or wind measurements, components of an electricity generating wind farm, such as a wind turbine, transformer or pole, depends on a number factors related to seabed composition, water depth, and environmental loads (wind, wave, currents, ice).

When installing an offshore mounting, it is important that the mounting can be safely transported to the site of installation, installed quickly and accurately. It should also be stable in the seabed to prevent toppling or undesired movement. Where an offshore mounting is used in a wind farm, there are demands that it carries ever larger turbines. Environmental pressures, seabed geology, size of territorial waters reduce effective available space, meaning turbines are require to have a greater capacity. This trends continues with the growth in renewable energies. With conventional wind turbine foundations, piles are driven into the seabed; to accommodate the larger wind turbines, piles with a length of 20 meters or more may be required which can make such constructions uneconomical. Gravity foundations have not conventionally be considered as suitable for larger turbines and larger water depths.

US 2004/0262926 A1 describes a wind turbine and a system for installation thereof. It requires a transport vessel especially adapted to carry a set of turbines. Each turbine is equipped with a system of ballast tanks to control buoyancy during lowering. Quite apart from the expense the transport vessel necessitates, the design requires a system of pipes to and pumps to serve the ballast tanks, and a size of the base sufficiently large to carry the turbine by virtue of its own weight. The size alone contributes to the construction and transport costs. Furthermore, the seabed must be absolutely level to ensure a vertical tower section, and true alignment of the turbine.

Other gravity foundations are described in the prior art which also present the same problems necessitating costly and/or complex manufacture and installation such as GB 2 365 905, US 4,239,418, GB 2 225 365, and WO 03/095748.

Document WO 02/095139A, which can be seen as the closest prior art, discloses a gravity foundation e.g. for wind power stations. The foundation is made of thin shell structure, fixed with solid material.

The present invention provides a cost-effective and technically efficient gravity foundation, and overcomes the problems associated with the prior art.

### SUMMARY OF SOME EMBODIMENTS OF THE INVENTION

One embodiment of the present invention provides an offshore gravity foundation for mounting an offshore upright construction such as a mast (*e.g*. a mast for transmission and/or receipt of electromagnetic radiation or a mast for weather and/or wind measurements) or components of an electricity generating wind farm such as a wind tower, transformer or pole, comprising the features according to claim 1.
The rim of the foundation is configured to receive solid ballast which adds weights and stability to the foundation after installation. The ballast is not part of the foundation prior to installation, therefore, the inherent weight of the foundation is massively reduced. Such foundation is consequently more economical to construct and also cheaper to transport to the site of installation. The reduction of weight is also an important factor in reducing installation risks. The solid ballast can be readily applied by tipping-out from a storage vessel.

According to the invention, the rim is configured to increase the surface of the foundation contacting the sea bed. The rim advantageously maximises the footprint of the foundation. As the size of the lower section can be reduced by the presence of the rim, the increase in footprint area is achieved with a concomitant reduction in weight. Further stability may be provided by a cutting wedge present on base and/or rim, preferably on the periphery of the rim. The narrow end of the wedge penetrates the sea bed, preventing translational movement and also providing a stabilising anchor. This leads to still further savings in construction and transport expenditure.

A gravity foundation can have the rim and base made as a single entity. Constructing the rim and base section a single piece permits a stronger foundation and more economical construction.

According to the present invention, the base is configured to support the weight of solid ballast residing in a void of the interior of the foundation. The solid ballast can be provided after installation, allowing the weight of the foundation to be still further reduced, so saving construction and transport costs. The configuration of the base to support the solid ballast allows additional forces to be transmitted directly to the seabed.

Another embodiment of the present invention is a gravity foundation as described above wherein the midpoint of the base is raised compared with at least part of the periphery of the base. Another embodiment of the present invention is gravity foundation as described above wherein the base is at least partly conical. Raising the base towards the midpoint provides a ridge suitable for the capture of ballast weight, and more efficiently transmits the force of the solid ballast towards the base and rim in contact with the seabed

Another embodiment of the present invention is a gravity foundation as described above, wherein the base and lower section are temporarily sealed, giving the gravity foundation buoyancy during transport. Another embodiment of the present invention is gravity foundation as described above, wherein the base and/or lower section comprise a temporary sealing assembly. Another embodiment of the present invention is gravity foundation as described above, wherein the base comprises a comprises a opening, temporarily sealed with a removable system such as a plate. Another embodiment of the present invention is gravity foundation as described above, wherein said removable system is dome-shaped. A temporary seal allows the foundation to be floated, supported in an essentially upright position by a lifting crane, and sunk at will in an essentially vertical position. A seal is technically efficient, and does not require a complex system of ballast tanks contrary to systems of the prior art.

Another embodiment of the present invention is a gravity foundation as described above further comprising a lifting collar located on the upper section. The collar evenly distributes forces during lifting, unlike discrete hoisting points of the prior art which give rise to stress points or fractures on the foundation, owing to high forces focused at discrete points.

Another embodiment of the present invention is a gravity foundation as described above further comprising an adjustable cover plate which is attached to the flange, onto which the upright structure can be mounted, and which comprises leveling means. The cover plate allows the flange to be effectively leveled before the upright structure is attached. Where the upright structure is a wind turbine, it can be difficult to determine the level after installation of the gravity foundation as the structure is more massive. Furthermore, the increased weight of the structure adds to the difficultly of alignment.

Another embodiment of the present invention is a gravity foundation as described above wherein the lower section is conical and the upper section is cylindrical. The configuration reduces erosion of the surrounding seabed of the foundation, and generates less turbulence under the water.

Another embodiment of the present invention is a gravity foundation as described above wherein an interface between the upper section and the lower section is positioned, so as in use to be located below the surface of the sea after installation, at depth below the keel of a docking vessel. This allows the volume of the lower section to be maximized while allowing easy access by floating vessels.

Another embodiment of the present invention is a gravity foundation as described above wherein collar is positioned on the upper section so as to be located below the surface of the sea after installation, at depth below the keel of a docking vessel or inside the upper section.

Another embodiment of the present invention is a gravity foundation as described above further comprising a cutting wedge disposed on the rim or base, configured to penetrate the sea bed after installation. Such wedge prevents translation of the foundation during and after installation, and stabilise the structure without the need to drive deep piles into the sea bed

Another embodiment of the present invention is an offshore upright component in combination with and mounted on a gravity foundation as described above.

Another embodiment of the present invention is an offshore wind farm, comprising at least one gravity foundation as described above.

Another embodiment of the present invention is a method of offshore installation of such a gravity foundation.

The present method avoids the use of piling and/or drilling methods which can be time consuming and expensive. For example, for gravity foundations supporting larger wind turbines, piles of 20m or more need to be driven and/or drilled. This is an expensive procedure. Where harder sand layers or rock beds are encountered, the process can be delayed. The present method makes substantial use of solid ballast can be readily applied, and does not depend on the deep seabed geology.

According to the claimed method said solid ballast is introduced via an opening formed by the flange in the upper section of the gravity foundation.

Another embodiment of the present invention is a method as described above where in step 4) comprises the step of unsealing a temporary seal assembly in a base of the foundation to allow entry of water ballast.

Another embodiment of the present invention is a method as described above further comprising the step of backfilling the well area with natural seabed material.

Another embodiment of the present invention is a method as described above further comprising the step of adding an erosion protection layer to the foundation area.

Another embodiment of the present invention is a method as described above, further comprising the step of adding an armour rock layer to the well area.

### LEGENDS TO FIGURES

**Figure 1****:** Longitudinal crossectional view of a gravity foundation according to the present invention.
**Figure 2****:** Longitudinal crossectional view of a gravity foundation according to the present invention, indicating construction modules.
**Figure 3****:** Longitudinal crossectional view of a gravity foundation according to the present invention, indicating the foundation *in situ* offshore.
**Figure 4****:** Longitudinal crossectional view of the base of a gravity foundation according to the present invention, indicating a temporary seal assembly.
**Figure 5A****:** Plan view of an adjustable cover plate.
**Figure 5B** **and C:** Longitudinal crossectional views of an adjustable cover plate.
**Figures 6 to 12**: Method of installation of a gravity foundation: excavating a well (Fig 6); adding a foundation layer (Fig 7); transporting gravity foundation (Fig 8A); plan view of gripping means (Fig 8, 8B); lowering gravity foundation into sea (Fig 9A); unsealing the temporary seal assembly (Fig 9B); adding solid ballast (Fig 10); backfilling with sand (Fig 11); providing gravel and rock layers (Fig 12).

### DETAILED DESCRIPTION OF THE INVENTION

The articles "a" and "an" are used herein to refer to one or to more than one, i.e. to at least one, the grammatical object of the article. By way of example, "a collar" means one collar or more than one collar.

The recitation of numerical ranges by endpoints includes all integer numbers and, where appropriate, fractions subsumed within that range (*e.g*. 1 to 5 can include 1, 2, 3, 4 when referring to, for example, a number of item, and can also include 1.5, 2, 2.75 and 3.80, when referring to, for example, distances).

### Gravity foundation

A first aspect of the present invention provides an offshore gravity foundation which can be easily transported to the site of installation, and stably placed on the sea bed without the need for anchoring points driven into the sea floor. Reference is made in the description to the drawings which exemplify particular embodiments of the invention; they are not at all intended to be limiting. The skilled person may adapt the foundation and substituent components and features according to the common practices of the person skilled in the art.

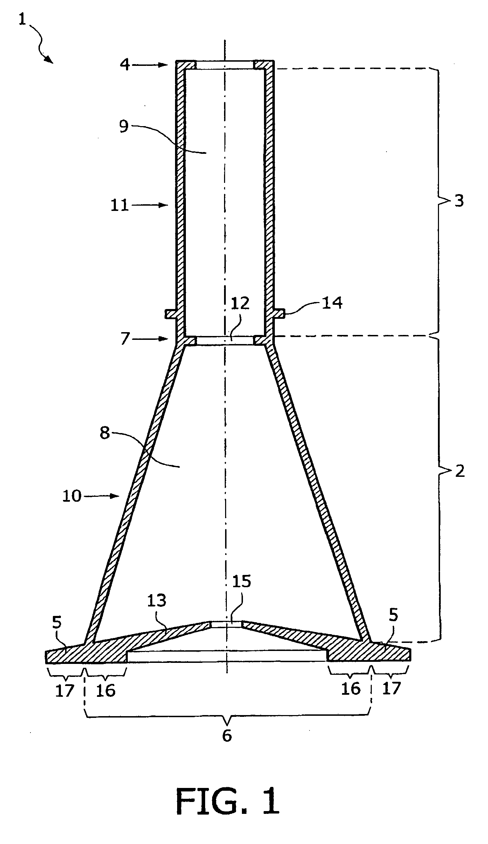

With reference to **Figure 1****,** the first aspect is related to an offshore gravity foundation **1** comprising a wide lower section **2** which base **6** at least partially contacts the sea bed and a narrower upper section **3** ending upwards in a flange **4.**

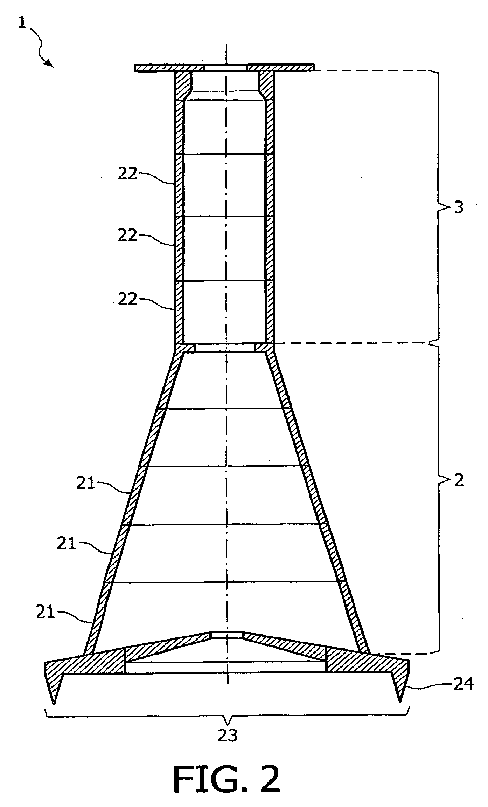

The base **6** of the lower section **2** is extended with a rim **5** which is disposed around the outside periphery of the base. The rim can increase the surface of the foundation **1** in contact with the sea bed **17.** The rim is preferably suitable for covering with solid ballast such as sand and rock which increases effective the weight of the foundation on the seabed. The rim **5** is preferably devoid of airspaces or ballasting cavities i.e. it is solid. The rim allows an effective reduction in the footprint of the base **6,** by acting as a stabiliser, spreading the weight of the foundation **1,** and/or by receiving solid ballast. The rim may optionally be combined with or exchanged with a cutting wedge in order to optimize the advantages of a rim. The cutting wedge may be disposed on the base or rim, and is configured so that the narrow end of the wedge can penetrate into the sea bed once installed. Preferably, it is configured to enter the sea bed essentially vertically. With reference to **Figure 2****,** the cutting wedge **24** is preferably disposed at least partially around the outer circumference of the footprint. It is even more preferably disposed at least partially around the circumference of the rim **5**. The cutting wedge penetrates the sea bed to such a depth that the contacting areas **16, 17** of the rim and base are able contact the sea bed. The cutting wedge **24** prevents translational movement of the foundation during and after installation, and provides additional stability. According to one aspect of the invention, the distance from the base of the wedge to its tip is equal to or greater than 0.1, 0.2, 0.3, 0.4, 0.5, 0.6, 0.7, 0.8, 0.9, 1, 1.2, 1.4, 1.5, 1.6, 1.8, 2.0 m or value in the range between any two of the aforementioned values.

The lower section **2** acts as a stabilising structure. It is of any shape, having a wide base **6** which gradually narrows upwards towards the interface **7** with the upper section **3**. The narrowing can be linear such as in a cone as exemplified in the present drawings. It may equally well be other shapes such as pyramidal or dome-like. It can also be stepped. The footprint of the base **5** can be circular as illustrated herein, however, it can also be any suitable shape such as square, triangular, or polygonal. The transverse cross-sectional profile (*i.e*. perpendicular to the longitudinal axis) of the interface **7** with the upper section **3** can be circular as illustrated in the present drawings. Depending on the cross-sectional profile of the upper section **7** it may alternatively be square, triangular or any suitable shape. The lower section **2** is preferably conical in shape, with a circular base **6.**

The lower section **2** can be made of any suitable material as known in the art such as reinforced concrete or steel. Where it is made from reinforced concrete, there may be a plurality of steel reinforcements *e.g*. an inner and outer steel mesh which constitute the walls of the foundation. The lower section can be at least partially hollow **8,** which allows the foundation to temporarily float, for example, in an upright position. The lower section **2** can be formed from smaller sections (*e.g.* in rings **21)** as illustrated in **Figure 2** which are separately constructed, and then suitably joined to form the complete lower section **2.**

Where the lower section **2** is at least partially hollow **8,** it can be filled with solid ballast after installation to provide greater stability of the lower section. Accordingly, the walls **10** of the lower section **2** may be strengthened to withstand the additional forces provided by the ballast.

The upper section **3** is significantly narrower than the base **6** of the lower section **2.** It is tubular and ends upwards in a flange **4** which is capable of coupling with the upright construction. The upper section **2** has cross-sectional profile (across the longitudinal axis) which is circular as illustrated herein, though it may be of any suitable profile, *e.g*. triangular, square, polygonal, irregular. The upper section **3** is preferably essentially cylindrical in shape, but can also have a smaller diameter in the wave affected area at the sea surface. It can have a constant profile in cross-section upwards, or it can taper slightly in the upwards direction. The upper section is configured to extend above the level of the sea when the foundation is installed on the sea bed.

The upper section **3** can be made of any suitable material as known in the art such as reinforced concrete, steel or composite. Where it is made from reinforced concrete, there may be a plurality of steel reinforcements *e.g*. an inner and outer steel mesh which constitute the walls of the section. The upper section **3** can be at least partially hollow **9,** which allows the foundation to temporarily float, for example, in an upright position when supported by a crane. The upper section **3** can be formed in sections (*e.g*. in rings **22)** as indicated in **Figure 2** which sections are separately constructed, and then suitably joined to form the complete upper section **3.** Where the upper section **3** is at least partially hollow **9,** it can be used as an entry point to fill the foundation with solid ballast after installation, to provide greater stability of the lower section. Accordingly, the walls **11** of the upper section **3** may be strengthened to withstand the additional forces provided by said ballast.

The upper section **3** may also be built separately from the lower section, and both sections joined. The interior void **9** of the upper section is preferably in continuity **12** with the interior void **8** of the lower section. The flange **4** is preferably open (unsealed). Preferably the gravity foundation **1** is an essentially hollow structure, open at the flange **4,** and temporarily sealed at the base **6.** Methods of engineering and construction of a foundation are known to the person skilled in the art.

The upper and lower section maybe provided with additional features as is common to off shore constructions such as, for example, inspection platforms, ladders, inspection hatches, mooring devices etc., and which are within the scope of the present invention.

### - Base

The base **6** and the lower section **2** may be temporarily sealed watertight; this gives the foundation buoyancy in a vertical position *i.e*. when the lower section is in the water and the foundation is supported by a floating crane. According to one variation described below, the base is provided with a temporary seal assembly so the foundation **1** can float during transport and sunk during installation. It is another aspect of the invention that the base **6** is configured to support the weight of solid ballast such as sand, metal, gravel and/or rock, said ballast residing in the void (**8** and/or **9)** of the interior of the foundation **1;** the base transmits the weight of the solid ballast to the sea bed, through the parts of the base **6** and rim **5** in contact with the sea bed. When solid ballast is so provided after positioning on the sea bed, it advantageously stabilises the foundation. Ballast can be introduced through the flange **4** of the upper section **3.**

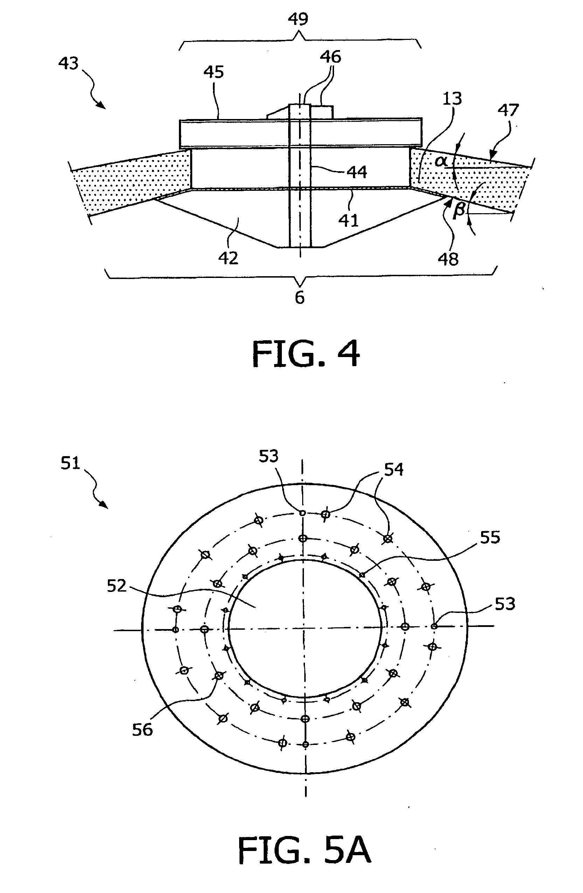

The structure of the base **6** of the lower section **2** is preferably configured such that it can receive and hold solid ballast. The base **6** may be raised at least in part from the sea bed. This allows the weight of the solid ballast to be taken on raised parts, and transmitted to the parts of the base and rim configured to contact the sea bed **16, 17.** The midpoint of the base is preferably raised compared with at least part of the periphery part of the base. Preferably, the periphery of the base inclines upwards towards the midpoint of the base, such as seen in a cone or pyramid. The angle of the incline (alpha in **Figure 4****)** of the upper surface **47** of the base 6 may be 1, 2, 3, 4, 5, 6, 7, 8, 9, 10, 11, 12, 13, 14, 15, 16, 17, 18, 19, 20, 21, 22, 23, 24, 25, 26, 27, 28, 29, or 30 deg, or a value between any two of the aforementioned values, said angle relative to the horizon in the installed position. The angle of the incline (beta in Figure 4) of the lower surface **48** of the base 6 may be 1, 2, 3, 4, 5, 6, 7, 8, 9, 10, 11, 12, 13, 14, 15, 16, 17, 18, 19, 20, 21, 22, 23, 24, 25, 26, 27, 28, 29, or 30 deg, or a value between any two of the aforementioned values, said angle relative to the horizon in the installed position. Preferably the angles of incline (alpha and beta) are between 5 and 20 deg. They can be the same or different. Such inclined base **6** is preferably conical in shape (*e.g*. as seen in a champagne bottle), having inclined walls **13** and an apex at the midpoint of the base. Where the foundation is provided with a temporary seal assembly, said base may be conical with an opening at the apex **15** as illustrated herein. Alternatively, the base may be essentially parallel with the seabed. The parts of the base **6** which are configured to contact the sea bed **16** are preferably located below the point where the wall **10** of the upper section **2** joins the base **6.**

The base **6** can be made of any suitable material as known in the art such as reinforced concrete or steel. Where it is made from reinforced concrete, there may be a plurality of steel reinforcements *e.g*. an inner and outer steel mesh which constitute the walls of the base **6.** The base **6** is preferably solid. The base and the rim is preferably a single continuous entity **23** as indicated in **Figure 2****.** The base and rim entity **23** can be constructed first, and suitably joined to the lowest module **21** of the lower section **2** as indicated in **Figure 2****.**

The configuration of the base **6** allows the weight of the foundation **1** to be considerably reduced during transportation, as ballast can be added after installation. The base **6** also permits a technically efficient ballasting, by pouring solid ballast material such as sand, gravel and/or rocks through the top of the upper portion of the foundation, so avoiding complex ballasting tanks of the prior art.

### - Dimensions

The relative dimensions of the lower section **2,** upper section **3** and rim **5** depend on the depth of the sea bed, load of the foundation, construction material of the upper and lower sections, and diameter of rim. Other limitations include the capacity of the construction and transport facilities, and area available on the sea bed. The person skilled in the art can calculate optimised dimensions based on these parameters, and in view of the aspects below.

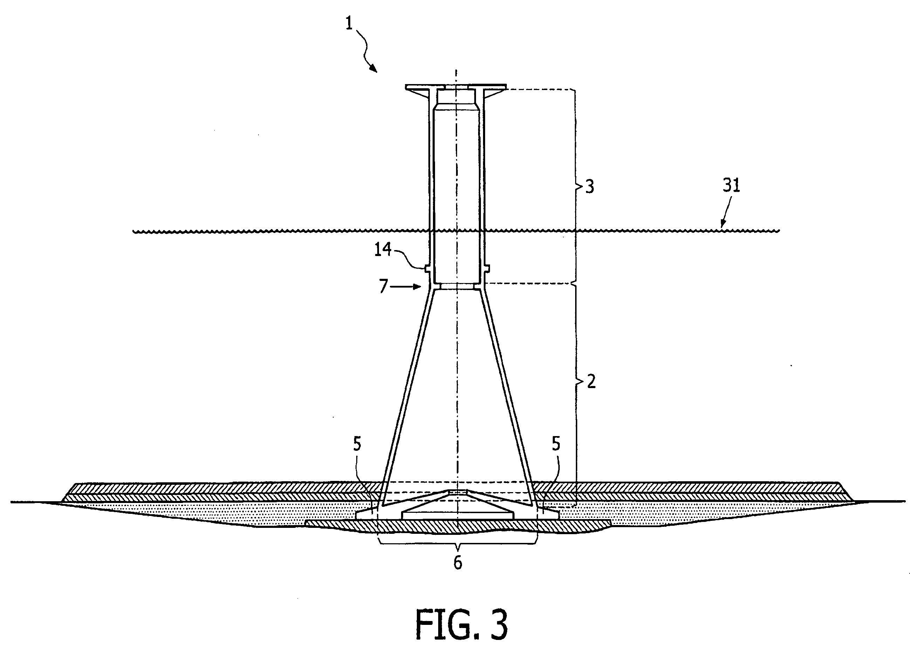

The position of interface **7** between the lower and upper sections **2, 3** influences the depth of the lower section **2.** According to one aspect of the invention, the interface **7** between the lower and upper sections **2, 3** is positioned, so as to be located below the surface of the sea **31 (****Figure 3****)** after installation, at depth below the keel of a docking vessel. The position of the interface allows a vessel to dock with the foundation **1** without grounding on the lower section **2** and allowing for tidal variation. According to one aspect of the invention, the interface between the lower and upper parts is 1, 1.5, 2, 2.5, 3, 3.5, 4, 4.5, 5, 5.5, 6, 7, 8, 9, 10 m below the surface of the sea at the lowest tide, or a depth between any two of the aforementioned values. Preferably, the interface between the lower and upper parts between 3 and 5 m below the lowest tide.

According to one aspect of the invention, the transverse diameter of the base is equal to or greater than 2, 3, 4, 5, 6, 7 or 8 times the diameter of the upper section, or a factor in the range between any two of the aforementioned values; it is preferably between 4 and 6 times.

The rim **5** extends the area footprint of the gravity foundation, compared with that of the base **6** alone. According to one aspect of the invention, the footprint area of the foundation when the rim is present **5** is 1.1, 1.2, 1.3, 1.4, 1.5, 1.6, 1.7, 1.8, 1.9 or 2 times the footprint area of the foundation when the rim is not present, or a factor in the range between any two of the aforementioned values; it preferably extends the footprint of the base by between 1.3 and 1.7 times.

Ideally, the skilled artisan will minimise the area of the footprint of the base **6** of the lower part **2** while maximizing the footprint of the rim **5** which leads to a lighter and more economical construction.

The thickness of the wall of the lower **10** and upper **11** sections is preferably limited in order to reduce the weight of the construction.

Other factors used to determine relative dimensions include the weight of the construction taking in account the forces during transport, filling the gravity base foundation and the overall stability wind turbine generator including foundation.

### - Temporary seal assembly

The foundation **1** being at least partially hollow **8, 9** is capable of floating in an upright position during marine transport. As already mentioned above the base **6** and the lower section **2** may be temporarily sealed watertight which gives the foundation buoyancy in an upright position *i.e.* when the lower section is in the water and the foundation is supported by a floating crane. According to one aspect of the invention, the lower section **2** is provided with a temporary seal assembly, which restricts the entry of at least water ballast. After floating the foundation into position with the lower section **2** in the sea, the temporary seal assembly can be unsealed and the foundation flooded with water, allowing sinking to the sea bed in an essentially vertical position. It is a further aspect of the invention that the topmost flange of the upper portion is open or is disposed with a means to open, so venting displaced air and water during sinking.

According to one aspect of the invention, the temporary seal assembly comprises an opening in the lower section **2,** preferably the base **41,** which is sealed by a removable plate **41.** An example of such assembly **49** is given in **Figure 4** in which, the removable plate **41** is clamped to an inclined wall **13** of the base **6** by means of a suitably shaped plug **42.** The plug **42** attaches to the base by way of a bolt **44** which passes to the interior **43** of the base **6** and through a holder which is an H-beam **45** in **Figure 4****.** The removable plate **41** is temporarily held in place by means of a pin **46** which passes through a hole in the bolt **44.** Releasing the pin **46** causes the plug **42** and the plate 41. The H-beam **45** can be removed, for example by means of a crane hook fed trough the top of the upper section **3,** and which contacts the pin **46** and optionally the H-beam **45** in **Figure 4****.** The plate 41 is temporarily held in place by means of a pin **46** which passes through a hole in the bolt **44.** Releasing the pin **46** causes the plug **42** and the plate **41** to fall away. The H-beam **45** can be removed, for example by means of a crane hook fed through the top of the upper section **3,** and which contacts the pin **46** and optionally the H-beam **45.**

The configuration of the removable plate described in **Figure 4** is only one possible embodiment of the temporary seal assembly. Any suitable temporary seal assembly can be provided. For example, a removable plate can temporarily seal an opening in the lower section **2,** preferably the base **6,** for instance, by way of a weakened water-tight joint or joints that can be broken by the application of force. Alternatively, a removable plate may be configured to open by unscrewing, by sliding or by pulling the plate relative to the opening in the lower section **2** or base **6.** The removable plate can be made from any suitable material such as steel, reinforced concrete or composite material. The temporary seal assembly preferably comprises a domed plate **41** held in co-operative contact with the base **13, 6** of the lower section by means of a central pin **44** which head is located on the interior of the base **43.** Releasing the pin, for example by means of a crane hook fed trough the top of the upper section, causes the domed plate to fall away from the base, so unsealing the temporary seal assembly.

### - Lifting collar

During transport to the installation site, the foundation **1** is suspended in the sea. The natural buoyancy reduces the net weight, so reducing transportation costs and assuring increased stability during transport. The foundation **1** is supported in the sea by a floating crane, maintaining the foundation in an essentially upright position both during towing and optionally during sinking. To assist transportation, the foundation may be provided with one or more hoisting points. The hoisting points may be positioned above the centre of gravity of the foundation, preferably in the vicinity of the upper section, and allow attachment to a crane. Such hoisting points are known in the art. However, a disadvantage of using conventional hoisting points are stress points or fractures on the foundation, owing to high forces focused at discrete points. One aspect of the present invention, therefore, is a foundation comprising a lifting collar **14** located on the upper section **3.** The collar **14** is preferably an uninterrupted ridge-like structure which circumnavigates around a portion of the upper section as indicated in Figure 1. The collar is preferably flat and could be located outside or inside the upper section **3.** The collar distributes the weight of the foundation evenly during lifting, so preventing stresses otherwise associated with single hoisting points.

The lifting collar **14** is positioned, so as to be located below the surface of the sea after installation, at depth below the keel of a docking vessel. The position allows a vessel to dock with the foundation **1** without grounding on the collar **14** and allowing for tidal variation. According to one aspect of the invention, the collar **14** is located on the upper section **3,** and is 1, 1.5, 2, 2.5, 3, 3.5, 4, 4.5, 5, 5.5, 6, 7, 8, 9, 10 m below the surface of the sea at the lowest tide, or a depth between any two of the aforementioned values.

The materials of constriction, thickness and diameter of the collar **14** can be determined by the person skilled on the art, depending on the weight and dimensions of the foundation. Where, for instance, the foundation has a mass of 2 700 tonnes, a 20 m upper section, a 22.5 m lower section, a 5 m upper section diameter, the collar can be made from reinforced concrete, placed about 2 m above the interface between the upper and lower sections, have a thickness of 0.7 m, and increases the diameter of the upper section to 5.9 m in the region of the collar (*i.e.* creates a 0.45 m ledge around the upper portion).

The lifting collar **14** is preferably of a shape and thickness to couple with the effector end of a crane hoist which allows a close and safe coupling during lifting.

### - Adjustable cover plate

The upper section **3** ends upwards in a flange **4** to which the upright construction is attached. The upright construction can be any such as, for example, a radio mast, or an electricity generating wind farm component such as the wind turbine, transformer or pole. A wind turbine, typically comprises a connecting flange, tower, nacelle, and rotor blades. For efficiency and to reduce overall stresses, it is desirable to maintain the tower of the wind turbine in a true vertical position, which depends on the flatness of the seabed to achieve a truly vertical foundation. Even small variations in the sea bed can lead to a large and undesirable inclination of the foundation. It is an aspect of the invention to overcome deviation in the vertically of the foundation by providing an adjustable cover plate **51** which attaches to the flange **4,** onto which the wind turbine can be mounted, and which comprises leveling means. The adjustable cover plate can be leveled prior to mounting of the turbine. An example of a cover plate is provided in **Figures 5A to 5C****.**

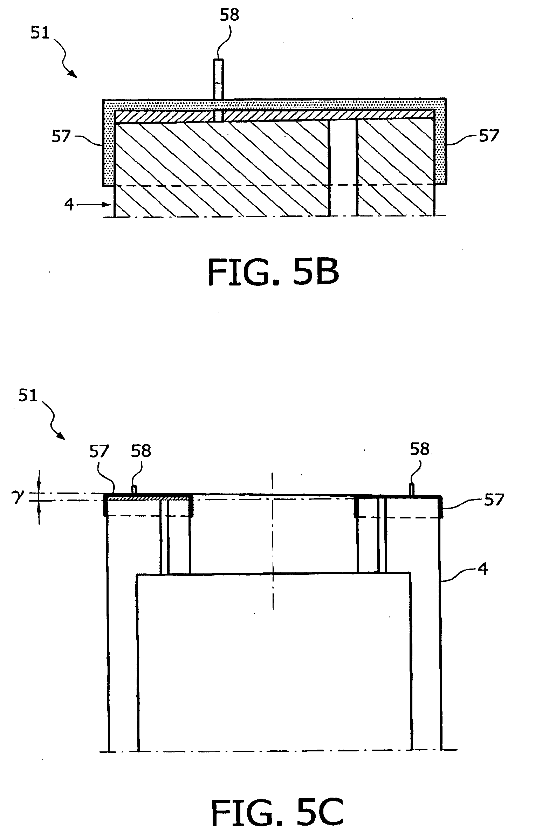

The cover plate **51** fits over at least part of the flange **4** of the upper section. It preferably covers the area of the flange **4** following essentially the same shape thereof (e.g. circular, square, triangular etc). Where the flange has a hollow centre, the cover plate may also have a hollow centre **52** as shown in **Figures 5A** **and** **5C****,** though it may also cover the opening caused by a hollow centre of the flange **4.** The cover plate **51** can be made from one or more suitable materials such as steel. The cover plate **51** can be provided with a plurality of screw adjustments **53** to raise or lower a given portion of the cover plate relative to the flange. A screw adjustment **58** is indicated in Figures 5B and 5C. The cover plate may be leveled by fine tuning the screw adjustments. Alternatively, the cover plate **51** may be provided with other means to adjust the height such as, for example, inflatable bags, hydraulic pistons, levers or any other means for changing the height of part of the adjustable plate relative to the flange. The cover plate **51** is provided with openings for anchor bolts **56** of the wind turbine.

The cover plate **51** in **Figure 5B** is provided with one or more additional rims **57, 58** which flank the sides of the flange **4,** so capping the flange **4.** The rims **57, 58** may act to seal the cover plate **51** during injection of hard-setting substances, and/or to protect the edge of the flange **4** from weathering.

By adjustment, one or more angles of inclination of the foundation can be corrected *e.g*. gamma in as indicated in **Figure 5C****,** so that tower lies in a true position.

The adjustable cover plate **51** allows the top platform to be adjusted before installation of the wind turbine. This makes the leveling procedure easier as access to the foundation **1** is not impeded by the turbine, and the weight of the turbine does not need to be moved during adjustment. By leveling the platform at sea, a more accurate final leveling is achieved.

### - Construction

The foundation may be constructed onshore, from prefabricated sections. The construction comprises three main phases, and two optional steps:
1. Construction of the base **6** of the lower section **2,**
2. Construction of the lower section **2,**
3. Optional construction of the lifting collar **14,**
4. Construction of the upper section **3,**
5. Optional construction of the adjustable cover plate **51.**

### - Offshore structures

The present invention is applicable to a gravity foundation stored on land, intended for transport and installation at sea. It also relates a gravity foundation installed at sea. One embodiment of the present invention is an offshore gravity foundation as disclosed herein. Another embodiment of the present invention is an offshore upright construction (*e.g*. mast, wind farm component, wind turbine, transformer, pole) mounted on a gravity foundation as disclosed herein. Another embodiment of the present invention is an offshore wind farm, comprising at least one gravity foundation as disclosed herein.

### Method of installation

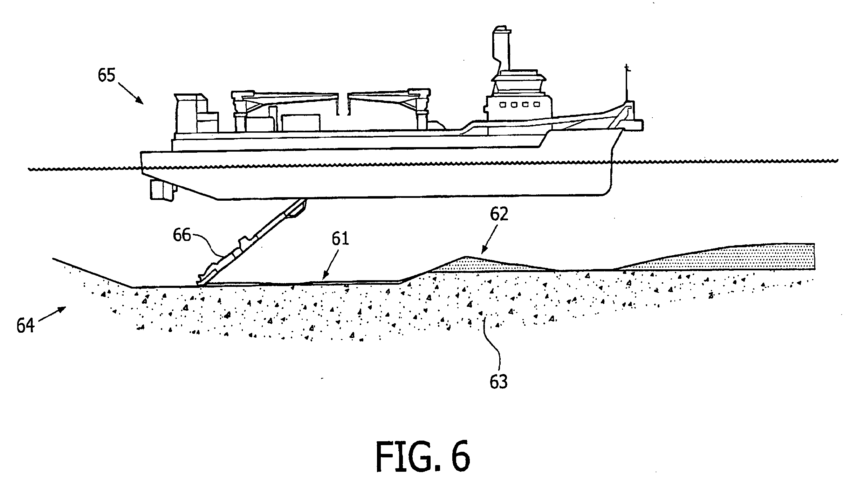

A second aspect of the invention is a method for the installation of a gravity platform. The method is applicable to any platform comprising an internal void, preferably situated at least partly towards the base of the platform. It is suitable for the installation of a gravity foundation as described herein. Reference is made herein to **Figures 6 to 12****,** which illustrate certain embodiments of the method; they are not intended anyway to limit the invention. The skilled person may adapt the method and substituent features according to the common practices of the person skilled in the art.

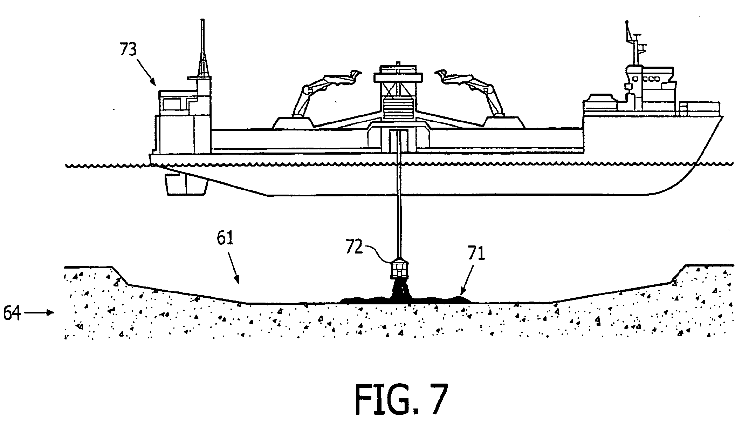

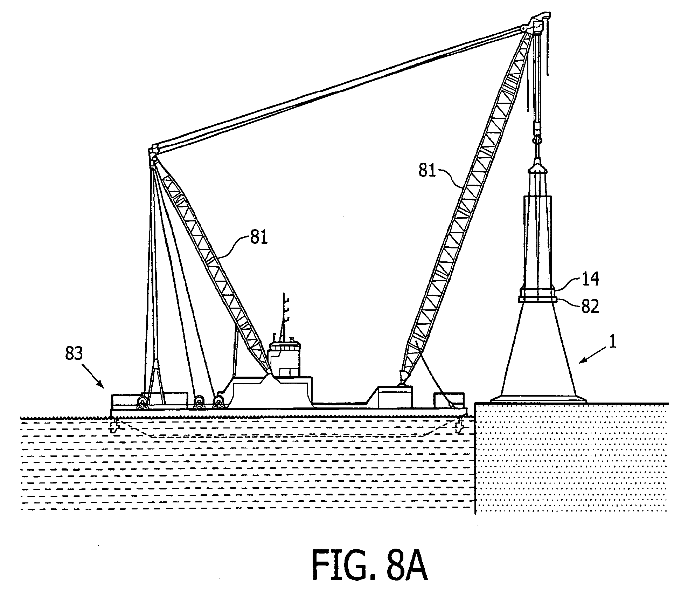

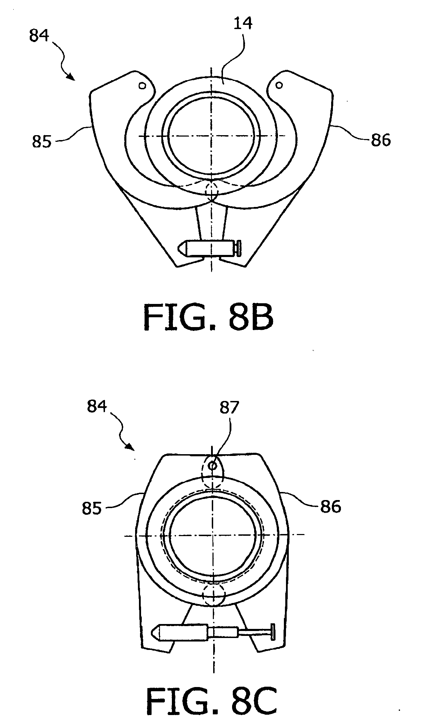

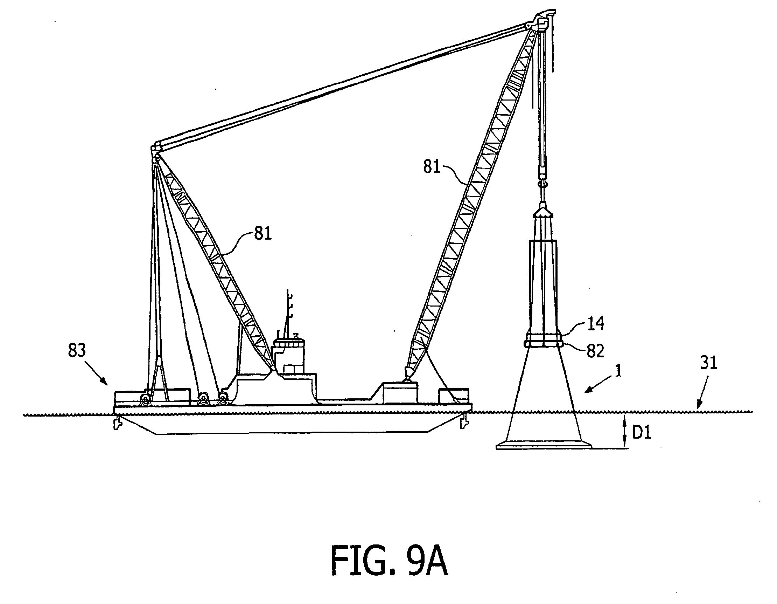

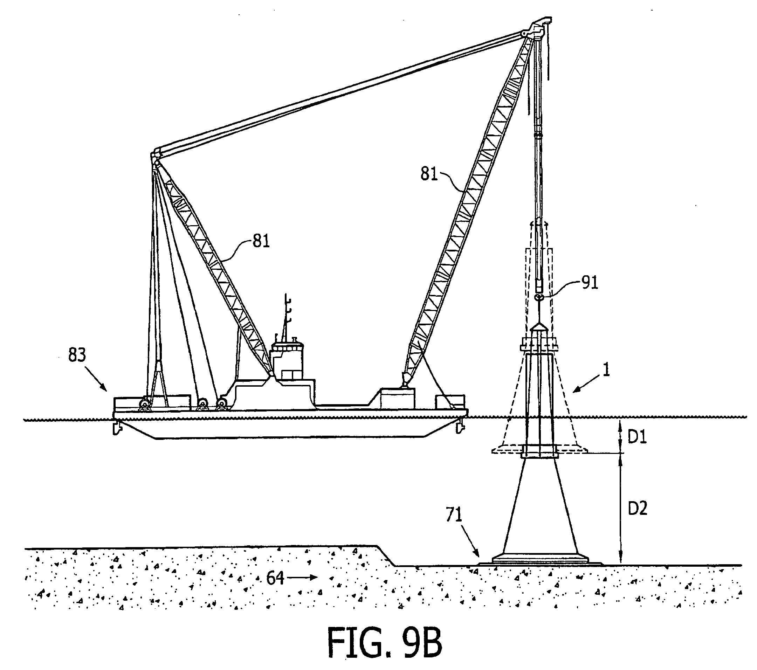

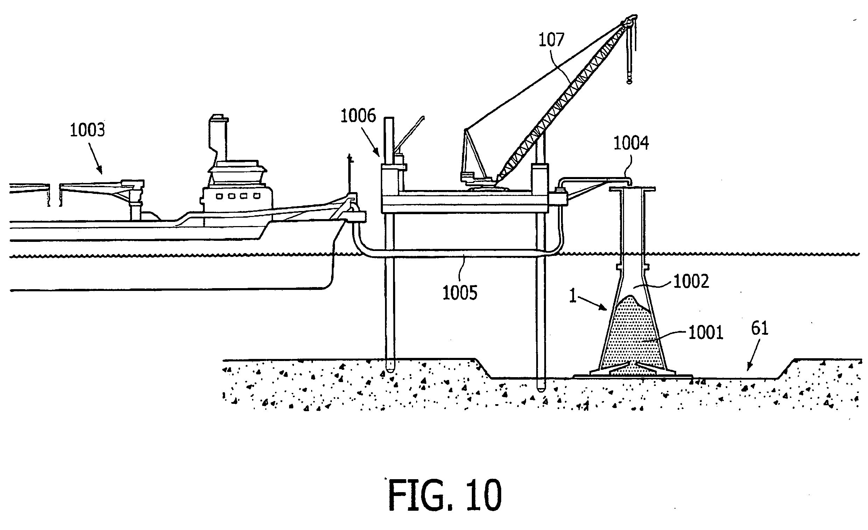

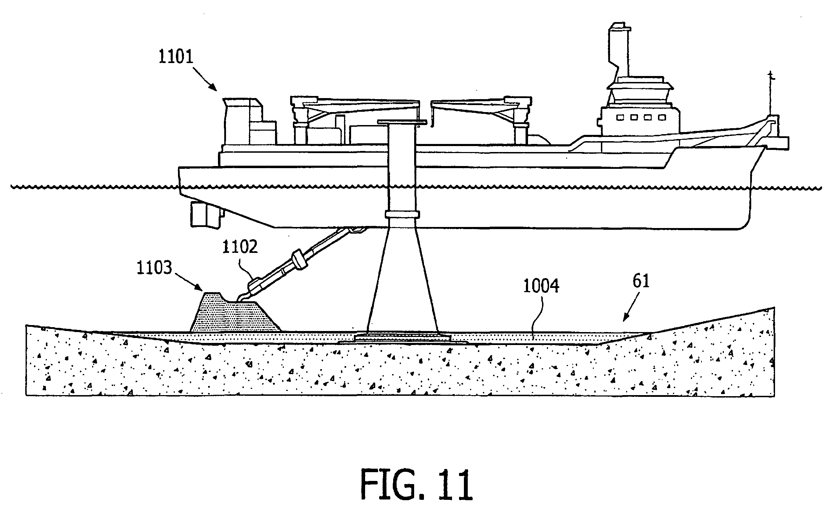

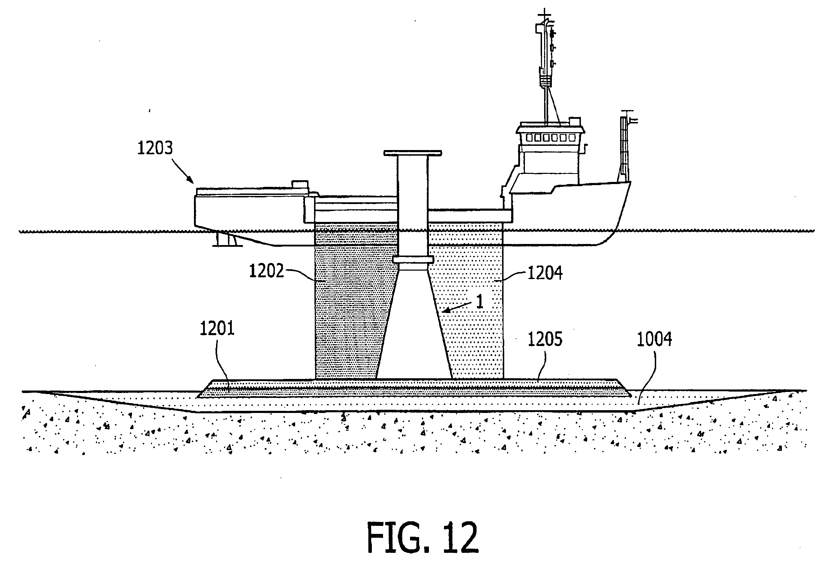

According to a method of the invention, the installation comprises one or more, and preferably all the following steps:
Step 1. Removing loose seabed material, such as sand, silt or clay **62** and a layer of medium loose to dense sand **63** and thus excavating a shallow well **61 (****Figure 6****)** on the sea bed **64** at the site of installation. The shallow well **61** is preferably configured to encompass at least the base and rim of the lower section of the foundation. Preferably the well is essentially level.
   A depth of the well would be calculated by the skilled artisan. As a guidance, however, the loose seabed material and medium loose to dense sand are removed to a depth of 4 m for a foundation which is 42 m tall, 22 m in diameter as the base, with an unballasted weight of 2700 tonnes and stands in water with a depth of 20 m at low tide. The depth of the well may be less than 1, 2, 3, 4, 5, 6, 7 or 8 m or a value between any two of the aforementioned values. It is preferably between 1 and 5 m deep.
   With reference to **Figure 6****,** the shallow well **61** is created using known technology, such as, for example, a dredging vessel **65** equipped with a trailing suction pipe **66.**
Step 2. Disposing a foundation layer **71 (****Figure 7****)** in at least part of the shallow well **61.** The foundation layer **71** covers at least part of the footprint of the base and rim of the gravity foundation **1.** It preferably extends beyond said footprint. The foundation layer **71** can be leveled, for example, by using self-leveling composition or by means of external spreading. The foundation layer **71** is a buffer between the foundation structure **1** and the sea bed **64.** The layer **71** preferably comprises a more course substance than sand, which is spreadable but less probe to agitation by underwater currents. Examples of suitable substances include broken rocks or gravel of size 24, 28, 32, 36, 40, 44, 48 or 50 mm, or a size in the range between any two of the aforementioned sizes. Preferably, foundation layer **71** is broken rock or gravel between 28 to 40 mm. The skilled person may adapt the foundation layer **71** according to the common practices of the person skilled in the art taking in account the site specific conditions and the seabed morphology.
   The foundation layer **71** may be evenly distributed to the sea bed, to achieve an essentially level buffer. It can be applied by tipping or spraying from a vessel, for example. It may also be applied by lowering an applicator **72** to the sea bed from a suitably equipped barge **73.** It is economical in terms of materials and application, and does not necessitate complex underwater works by divers.
   A depth of the foundation layer **71** would be calculated by the skilled artisan. As a guidance, however, the foundation layer may have a thickness of about 1 m for a gravity foundation structure **1** which is 42 m tall, 22 m in diameter, with an unballasted weight of 2700 tonnes and stands in water with a depth of 20 m or low tide.
Step 3. Transporting the gravity foundation **1** to the site of installation. The gravity foundation is preferably towed to the site of installation by a vessel, provided with a crane for supporting the foundation **1.** According to one aspect of the invention, the crane **81 (****Figure 8A****)** is equipped with a gripping mechanism **82** which couples with the lifting collar **14,** where present, of the gravity foundation **1.**
   According to one aspect of the invention, and with reference to **Figure 8B****,** the gripping mechanism may be a hydronic grip **84** which encompasses the lifting collar. In a hydraulic grip **84** the griping mechanism comprises a hinged grip of two jaws **85, 86** complementary to the lifting collar **14** in the closed position which, in the open position can be placed around the lifting collar **14.** Once in position, the gripping mechanism can be closed **(****Figure 8C****)** by bringing the two jaws **85, 86** together. Upon closure, the jaws **85, 86** couple tightly with the collar **14.** The jaws may be securely locked in the closed position with a lock pin **87.** Use of a gripping mechanism **82, 84** and a lifting collar **14** enables the gravity foundation **1** to be safely maneuvered by a single crane **81,** minimizing swaying and other unwarranted movement, so simplifying and economising transportation to the site of installation.
   As an alternative to the gripping mechanism described above, the crane **8** may lift the gravity foundation **1** by coupling to a hoist positioned in another location, such as, for example, above the flange **4.**
   The gravity foundation **1** has a buoyancy when the base **6** of the lower section **2** is sealed. Therefore, the net weight of the foundation can be reduced if necessary by lowering partially into the water during transportation.
Step 4. Lowering the gravity foundation into place by means of a floating crane. With reference to **Figure 9A****,** the gravity foundation **1** can be gradually lowered below the surface of the sea **31** by means of a crane system **81** mounted on a vessel **83.** After immersion below the surface of the sea **31** at a certain depth (**D1**) or at the seabed a temporary seal assembly **49** can be unsealed. If the temporary seal assembly is a domed plate and pin assembly described above, the simple release of the pin by a crane hook **91 (****Figure 9B****)** would cause the domed plate to fall out, so unsealing said temporary seal assembly. Such simple temporary seal assembly avoids the need for a complex system of ballasting pipes and pumps as described in the prior art. Once unsealed, the gravity foundation 1 can be further lowered **(D2)** to the foundation layer **71** on the sea bed **64** by means of the crane system **81.** During lowering, the position of the foundation **1** can be optionally adjusted using additional tugs and cables.
Step 5. Filling at least part of the foundation with solid ballast. The solid ballast (*e.g*. sand, rocks, gravel) is preferably introduced through the top of the foundation **1** *e.g*. through an opening in an upper section such as a flange **4.** With reference to **Figure 10****,** the solid ballast **1001** can be provided by a vessel **1003** carrying ballast equipped pumping through a diffuser head **1004.** Alternatively, ballast can be provided to the foundation **1** by any means such as, for example, using a crane on a jack-up platform with a bucket head to mechanically scoop loads of ballast into the foundation 1. The ballast may be for example, sand. The ballast sand may be sand dredged from the sea bed in a location nearby the well, which configuration reduces the cost of transporting ballast to the site of installation. The solid ballasting may be performed in stages so the ballast can properly settle. In Figure 10, the space **1002** above the ballasted part **1001,** can be further filled once the ballasted part **1001** has settled.
   The amount of solid ballasting to at least partially fill the gravity foundation can be readily calculated by the person skilled in the art. As a guidance, however, the gravity foundation may be filled essentially entirely, for a gravity foundation structure which is 42 m tall, 22 m in diameter, with an unballasted weight of 2700 tonnes and stands in water with a normal depth of 20 m at low tide.
   Other features indicated in **Figure 10** include floating line **1005,** a crawler crane **1007** mounted on a jack-up pontoon **1006.** According to one aspect of the invention, the jack-up pontoon **1006** and crane **1007** support the diffuser head **1004.** The arrangement allows the vessel to dredge sand suitable for ballasting at a site remote from the shallow well **61.**
Step 6. Backfilling the well area with natural seabed material. A layer of back filled seabed material (*e.g.* sand, clay, gravel, rocks) is added to the well, which covers at least part of the rim of the foundation. Backfilling with natural seabed material restores the natural depth of the sea bed and covers the rim with a protective layer so reducing underwater erosion and corrosion. The natural seabed material can be sand, and/or clay dredged from a region outside the well, which is brought back into the well. With reference to **Figure 11****,** a dredging vessel **1101** equipped with a trailing suction pipe **1102** can be used to dredge natural seabed material **1103** previously cleared to create the well **61.** The dredged natural seabed material can be deposited in the well **61** to create a layer of backfilled natural seabed material **1004.** Alternatively, the well **61** can be filled by any means such as, for example, tipping sand stored on a seabed material-storing vessel from above the seabed in the vicinity of the well **61.**
   The level of natural seabed materialto which the well is filled can be readily calculated by the person skilled in the art. As a guidance, however, the well may be filled to the level of the natural sea bed by sand, for a 4 m deep well, a gravity foundation structure which is 42 m tall, 22 m in diameter, with an unballasted weight of 2700 tonnes and stands in water with a normal depth of 20 m at low tide.
Step 7. Adding an erosion protection layer to the well area. An erosion protection layer to protection the seabed from erosion by sea current is preferably applied onto the layer of back filled sand. The erosion protection layer comprises a filter layer and an armour rock layer. However, alternatives are envisaged, where further layers are applied over the previous layer (step 6), or the previous layer is substituted for a more course substance, which are within the scope of the present invention. The erosion protection layer further protects the rim from corrosion and erosion (scour protection). The filter layer may comprise gravel or crushed rock, which suitable size include 10, 14, 18, 22, 26, 30, 34, 36, 40, 44, 48, 52, 56, 60 mm, or a size in the range between any two of the aforementioned sizes. Preferably, the filter layer comprises gravel or crushed rock between 10 to 50 mm in size.
   The filter layer may be applied by any known technique, for example, by dumping from a stone-dumping vessel. With reference to **Figure 12****,** the gravel or crushed rock **1202** for forming the filter layer **1201** is tipped from the side of a stone dumping vessel **1203,** so forming a layer **1201** above the back-filled sand layer **1004.**
   The thickness of filter layer can be calculated by the person skilled in the art. As a guidance, however, the filter layer may be of a thickness of 0.7m, for a gravity foundation structure which is 42 m tall, 22 m in diameter, with an unballasted weight of 2700 tonnes and stands in water with a normal depth of 20 m or low tide.
   This erosion protection layer further protects the rim and foundation from underwater erosion and corrosion, and also adds solid ballast to the foundation for stabilization. The skilled person may adapt the erosion protection layer according to the common practices of the person skilled in the art taking in consideration the site specific conditions and the seabed morphology.
Step 8. Adding a layer of armour rock to the well area. The rock layer is preferably applied onto the erosion protection filter layer, however, alternatives are envisaged, where further layers are applied over the erosion protection layer, or erosion protection layer is substituted for a more course substance, which are within the scope of the present invention. The rock layer further protects the rim and the filter layer from erosion (scour protection). Examples of suitable rock sizes include rock of weight 10, 20, 30, 40, 50, 60, 70, 80, 90 or 100 kg, or a mass in the range between any two of the aforementioned masses or even above depending on the wave climax and currents that could occur in the vicinity of the foundation. Preferably, the rock layer comprises rocks between 10 to 60 kg in mass.

The rock layer may be applied by any known technique, for example, by dumping from a stone-dumping vessel. With reference to **Figure 12****,** the armour rock **1204** for forming the rock layer **1205** is tipped from the side of a stone dumping vessel **1203,** so forming a rock layer **1205** above the gravel layer **1201.**

The thickness of rock layer can be calculated by the person skilled in the art. As a guidance, however, the gravel layer may be of a thickness of 0.9m, for a gravity foundation structure which is 42 m tall, 22 m in diameter, with an unballasted weight of 2700 tonnes and stands in water with a normal depth of 20 m at low tide.

The skilled person may adapt the armour rock layer according to the common practices of the person skilled in the art taking in consideration the site specific conditions and the seabed morphology.

## Claims

1. An offshore gravity foundation (1) for mounting an upright construction such as a mast or components of an electricity generating wind farm such as a wind turbine generator, transformer or pole, the foundation comprising:
- a wide lower section (2) having a base (6) configured to at least partly contact the sea bed,
- an upper section (3) which extends from the wide lower section (2), which upper section is configured to extend above the level of the sea,
- which lower section (2) gradually narrows from the base (6) towards an interface (7) with the upper section (3), wherein the upper section (3) is narrower than the wide lower section (2),
- which lower section (2) and upper section (3) are at least partially hollow, whereby the interior void (9) of the upper section is in continuity with the interior void (8) of the lower section,
- which base (6) is extended with a solid rim (5), whereby the rim (5) is disposed around the outside periphery of the base, configured to increase the surface of the foundation (1) contacting the sea bed and to receive solid ballast,
**characterised in that,**
the upper section (3) ends in a flange (4) suitable for attachment to said wind turbine, the flange (4) forming an opening; and
said base (6) is configured to support the weight of solid ballast residing in the voids (8, 9) of the interior of the foundation (1).

2. Foundation according to claim 1 wherein the midpoint of the base (6) is raised (13) compared with at least part of the periphery of the base.

3. Foundation according to claim 2 wherein the base is at least partly conical (13). 3

4. Foundation according to any of claims 1 to 3 further comprising a lifting collar (14) located on the upper section (3).

5. Foundation according to any of claims 1 to 4 further comprising an adjustable cover plate (51) which is attached to the flange (4), onto which the upright structure can be mounted, and which comprises leveling means.

6. Foundation according to any of claim 1 to 5 wherein the lower section (2) is conical and the upper section (3) is cylindrical.

7. Foundation according to any of claims 1 to 6 wherein an interface (7) between the upper section (3) and the lower section (2) is positioned, so as to be located below the surface of the sea after installation, at depth below the keel of a docking vessel.

8. Foundation according to any of claims 4 to 7 wherein collar (14) is positioned on the upper section so as to be located below the surface of the sea after installation, at depth below the keel of a docking vessel.

9. Foundation according to any of claims 1 to 8 further comprising a cutting wedge (24) disposed on the rim (5) or base (6), configured to penetrate the sea bed after installation.

10. A combination of an offshore upright component and a gravity foundation according to any of claim 1 to 9, wherein the upright component is mounted on the gravity foundation.

11. An offshore wind farm, comprising at least one gravity foundation according to any of claim 1 to 9.

12. A method of offshore installation of a gravity foundation (1) in accordance with any one of claims 1-9, comprising the steps of:
1) removal of soft or unstable material at the site of the installation by making a well (61) on the sea bed,
2) disposing a level foundation layer (71) on at least part of said well (61),
3) transporting the gravity foundation (1) to the site of installation,
4) lowering the gravity foundation (1) into place by means of a crane,
5) filling the voids (8, 9) of the gravity foundation (1) with solid ballast via the opening formed by the flange (4) in the upper section (3) of the gravity foundation (1).

13. A method according to claim 12 where in step 4) comprises the step of unsealing a temporary seal assembly (49) in a base (6) of the foundation (1) to allow entry of water ballast.

14. A method according to claim 12 or 13, further comprising the step of backfilling the well area with natural seabed material which covers at least part of the rim of the foundation.

15. A method according to any one of claims 12-14, further comprising the step of adding an erosion protection layer to the foundation area.

16. A method according to any one of claims 12-15, further comprising the step of adding an armour rock layer to the well area.

## Patentansprüche

1. Offshore-Schwergewichtsgründung (1) zum Anbringen eines aufrecht stehenden Bauwerks wie eines Masts oder Bauteilen eines stromerzeugenden Windparks wie einer Windenergieanlage, eines Transformators oder eines Masts, wobei die Gründung aufweist:
- einen breiten unteren Bereich (2) mit einem Sockel (6), der so konfiguriert ist, dass er mindestens teilweise den Meeresboden berührt,
- einen oberen Bereich (3), der sich über dem breiten unteren Bereich (2) erstreckt, wobei der obere Bereich so konfiguriert ist, dass er sich oberhalb des Meeresspiegels erstreckt,
- wobei sich der untere Bereich (2) allmählich vom Sockel (6) bis zu einer Übergangsstelle (7) mit dem oberen Bereich (3) verengt, wobei der obere Bereich (3) enger als der breite untere Bereich (2) ist,
- wobei der untere Bereich (2) und der obere Bereich (3) mindestens teilweise hohl sind, wobei der Innenhohlraum (9) des oberen Bereichs von dem Innenhohlraum (8) des unteren Bereichs fortgesetzt wird,
- wobei der Sockel (6) mit einem massiven Rand (5) versehen ist, wobei der Rand (5) um den Außenumfang des Sockels angeordnet und so konfiguriert ist, dass er die Fläche der Gründung (1) vergrößert, die den Meeresboden berührt, und festen Ballast aufnimmt,
**dadurch gekennzeichnet, dass**
der obere Bereich (3) in einem Flansch (4) endet, der geeignet ist, um an der Windenergieanlage angebracht zu werden, wobei der Flansch (4) eine Öffnung bildet; und
der Sockel (6) so konfiguriert ist, dass er das Gewicht des festen Ballasts in den Hohlräumen (8, 9) im Inneren der Gründung (1) trägt.

2. Gründung nach Anspruch 1, wobei der Mittelpunkt des Sockels (6) im Vergleich zu mindestens einem Teil des Umfangs des Sockels erhöht (13) ist.

3. Gründung nach Anspruch 2, wobei der Sockel mindestens teilweise konisch (13) ist.

4. Gründung nach einem der Ansprüche 1 bis 3, die weiterhin eine im oberen Bereich (3) befindliche Hubmanschette (14) aufweist.

5. Gründung nach einem der Ansprüche 1 bis 4, die weiterhin eine verstellbare Abdeckplatte (51) aufweist, die an dem Flansch (4) befestigt ist, auf die die aufrecht stehende Struktur anbringbar ist und die Hebemittel aufweist.

6. Gründung nach einem der Ansprüche 1 bis 5, wobei der untere Bereich (2) konisch und der obere Bereich (3) zylindrisch ist.

7. Gründung nach einem der Ansprüche 1 bis 6, wobei zwischen dem oberen Bereich (3) und dem unteren Bereich (2) eine Übergangsstelle (7) so angebracht ist, dass sie sich nach der Installation unter der Meeresoberfläche in einer Tiefe unter dem Kiel eines Dockschiffs befindet.

8. Gründung nach einem der Ansprüche 4 bis 7, wobei die Manschette (14) so am oberen Bereich angebracht ist, dass sie sich nach der Installation unter der Meeresoberfläche in einer Tiefe unter dem Kiel eines Dockschiffs befindet.

9. Gründung nach einem der Ansprüche 1 bis 8, die weiterhin einen an dem Rand (5) oder dem Sockel (6) angeordneten Schneidkeil (24) aufweist, der so konfiguriert ist, dass er nach der Installation den Meeresboden durchdringt.

10. Kombination eines aufrecht stehenden Offshore-Bauteils und einer Schwergewichtsgründung nach einem der Ansprüche 1 bis 9, wobei das aufrecht stehende Bauteil auf der Schwergewichtsgründung angebracht ist.

11. Offshore-Windpark, der mindestens eine Schwergewichtsgründung nach einem der Ansprüche 1 bis 9 aufweist.

12. Verfahren zur Offshore-Installation einer Schwergewichtsgründung (1) nach einem der Ansprüche 1 bis 9, das die Schritte aufweist:
1) Beseitigung von weichem oder instabilem Material am Installationsort durch Ausheben einer Vertiefung (61) auf dem Meeresboden,
2) Anordnen einer ebenen Gründungsschicht (71) auf mindestens einem Teil der Vertiefung (61),
3) Transportieren der Schwergewichtsgründung (1) an den Installationsort,
4) Absetzen der Schwergewichtsgründung (1) mittels eines Krans,
5) Füllen der Hohlräume (8, 9) der Schwergewichtsgründung (1) mit festem Ballast über die durch den Flansch (4) gebildete Öffnung im oberen Bereich (3) der Schwergewichtsgründung (1).

13. Verfahren nach Anspruch 12, bei dem Schritt 4) den Schritt eines Öffnens einer vorübergehenden Dichteinrichtung (49) in einem Sockel (6) der Gründung (1) aufweist, um ein Eindringen von Wasserballast zu ermöglichen.

14. Verfahren nach Anspruch 12 oder 13, das weiterhin den Schritt eines Verfüllens des Vertiefungsbereichs mit natürlichem Meeresbodenmaterial aufweist, das mindestens einen Teil des Randes der Gründung bedeckt.

15. Verfahren nach einem der Ansprüche 12 bis 14, das weiterhin den Schritt eines Hinzufügens einer Erosionsschutzschicht auf den Gründungsbereich aufweist.

16. Verfahren nach einem der Ansprüche 12 bis 15, das weiterhin den Schritt eines Hinzufügens einer Bewehrungssteinschicht auf den Vertiefungsbereich aufweist.

## Revendications

1. Fondation gravitaire offshore (1) permettant de monter une construction verticale telle qu'un mât ou les composants d'un parc éolien de production d'électricité tels qu'un générateur, un transformateur ou un pylône d'éolienne, la fondation comprenant :
- une large section inférieure (2) ayant une base (6) configurée pour entrer en contact au moins partiellement avec le fond marin ;
- une section supérieure (3) qui s'étend depuis la large section inférieure (2), laquelle section supérieure est configurée pour s'étendre au-dessus du niveau de la mer ;
- laquelle section inférieure (2) se rétrécit graduellement depuis la base (6) en direction d'une jonction (7) avec la section supérieure (3), étant entendu que la section supérieure (3) est plus étroite que la large section inférieure (2) ;
- lesquelles section inférieure (2) et section supérieure (3) sont au moins partiellement creuses, le vide intérieur (9) de la section supérieure étant dans le prolongement du vide intérieur (8) de la section inférieure ;
- laquelle base (6) est élargie par un bord plein (5), le bord (5) étant disposé autour de la périphérie externe de la base, configuré pour augmenter la surface de la fondation (1) en contact avec le fond marin et pour recevoir du lest solide,
**caractérisée en ce que :**
la section supérieure (3) se termine par une bride (4) convenant pour être attachée à ladite turbine éolienne, la bride (4) formant une ouverture, et
**en ce que** ladite base (6) est configurée pour supporter le poids du lest solide situé dans les vides (8, 9) de l'intérieur de la fondation (1).

2. Fondation selon la revendication 1 dans laquelle le point médian de la base (6) est surélevé (13) par rapport à au moins une partie de la périphérie de la base.

3. Fondation selon la revendication 2 dans laquelle la base est au moins en partie conique (13).

4. Fondation selon l'une quelconque des revendications 1 à 3 comprenant par ailleurs un collet de levage (14) situé sur la section supérieure (3).

5. Fondation selon l'une quelconque des revendications 1 à 4 comprenant par ailleurs une plaque de recouvrement (51) ajustable qui est attachée à la bride (4), sur laquelle la structure verticale peut être montée, et qui comprend un moyen de mise à niveau.

6. Fondation selon l'une quelconque des revendications 1 à 5 dans laquelle la section inférieure (2) est conique et la section supérieure (3) est cylindrique.

7. Fondation selon l'une quelconque des revendications 1 à 6 dans laquelle une jonction (7) est positionnée entre la section supérieure (3) et la section inférieure (2) de sorte à être située en dessous de la surface de la mer après installation, à une profondeur située sous la quille d'un navire à l'amarrage.

8. Fondation selon l'une quelconque des revendications 4 à 7 dans laquelle le collet (14) est positionné sur la section supérieure de sorte à être situé en dessous de la surface de la mer après installation, à une profondeur située sous la quille d'un navire à l'amarrage.

9. Fondation selon l'une quelconque des revendications 1 à 8 comprenant par ailleurs un coin taillant (24) disposé sur le bord (5) ou la base (6), configuré pour pénétrer dans le fond marin après installation.

10. Combinaison d'un composant vertical offshore et d'une fondation gravitaire selon l'une quelconque des revendications 1 à 9, dans laquelle le composant vertical est monté sur la fondation gravitaire.

11. Parc éolien offshore, comprenant au moins une fondation gravitaire selon l'une quelconque des revendications 1 à 9.

12. Procédé d'installation offshore d'une fondation gravitaire (1) selon l'une quelconque des revendications 1-9, comprenant les étapes consistant :
1) à enlever le matériau meuble ou instable du site de l'installation en creusant un puits (61) dans le fond marin ;
2) à disposer une couche de fondation plane (71) sur au moins une partie dudit puits (61) ;
3) à transporter la fondation gravitaire (1) jusqu'au site d'installation ;
4) à descendre la fondation gravitaire (1) jusqu'à sa place au moyen d'une grue ;
5) à remplir les vides (8, 9) de la fondation gravitaire (1) avec du lest solide par l'ouverture formée par la bride (4) dans la section supérieure (3) de la fondation gravitaire (1).

13. Procédé selon la revendication 12 dans lequel l'étape 4) comprend l'étape consistant à ouvrir un ensemble d'étanchéité temporaire (49) dans une base (6) de la fondation (1) pour permettre l'entrée de l'eau de ballast.

14. Procédé selon la revendication 12 ou 13, comprenant par ailleurs l'étape consistant à remblayer la zone du puits avec des matériaux naturels du fond marin qui recouvrent au moins une partie du bord de la fondation.

15. Procédé selon l'une quelconque des revendications 12-14, comprenant par ailleurs l'étape consistant à ajouter une couche de protection contre l'érosion sur la zone de la fondation.

16. Procédé selon l'une quelconque des revendications 12-15, comprenant par ailleurs l'étape consistant à ajouter une couche d'enrochement de protection sur la zone du puits.
